# EUROPÄISCHE PATENTSCHRIFT

(11) **EP 1 039 234 B1**
(45) Veröffentlichungstag und Bekanntmachung des Hinweises auf die Patenterteilung: **31.03.2004**
(21) Anmeldenummer: 99126257.7
(22) Anmeldetag: 31.12.1999
(51) Int. Cl.: F24C 15/10, B29C 45/14

(54) **Halterung und Verfahren zur Herstellung einer Halterung für im wesentlichen flache Formkörper aus sprödbrüchigem Werkstoff**
Support and method for manufacturing a support for a substantially flat product made of brittle material.
Structure d'appui et procédé de fabrication d'une structure pour un produit substantiellement plat en matière fragile.

(30) Priorität: 10.03.1999 DE 19910467
(43) Veröffentlichungstag der Anmeldung: 27.09.2000
(73) Patentinhaber: Schott Glas, 55122 Mainz (DE); CARL-ZEISS-STIFTUNG trading as Schott Glas, 55122 Mainz (DE)
(72) Erfinder: Muskalla, Michael, 55128 Mainz (DE); Schultheis, Bernd, 55270 Schwabenheim (DE); Hottum, Werner, 55234 Bechenheim (DE)

(56) Entgegenhaltungen:
- EP-A- 0 407 797
- EP-A- 0 754 532
- EP-A- 0 785 058
- DE-A- 3 341 210
- DE-A- 19 703 270
- DE-A- 19 703 542

## Beschreibung

Die Erfindung betrifft eine Halterung und ein Verfahren zur Herstellung einer Halterung für im wesentlichen flache Formkörper aus sprödbrüchigem Werkstoff, wobei die Halterung den Formkörper wenigstens im unteren und seitlichen Randbereich umfaßt.

Eine derartige Halterung ist beispielsweise aus der DE 197 03 542 A1 bekannt. Dabei wird ein Rahmen, der aus temperaturbeständigem Kunststoff-Reaktionsschaum gebildet und an eine Kochfläche angeschäumt ist, beschrieben. In einer bevorzugten Ausführung umfaßt der Rahmen die Kochfläche an ihrer Ober- und Unterseite, wobei der Rahmen formschlüssig mit einem Tragabschnitt verbunden ist, der die Kochfläche an ihrer Unterseite unterfängt.

Der angeschäumte Kunststoff weist eine porige und damit schmutzanfällige Oberfläche auf. Im Haushaltsbereich übliche Reinigungsmittel und sonstige Schmutzpartikel setzen sich in den Poren fest und führen somit zu einer dauerhaften, oftmals störenden Verschmutzung. Hinzu kommt die, bei einigen in der DE 197 03 542 A1 genannten Kunststoffen, zu weiche Oberfläche und zu geringe Temperaturbeständigkeit. Durch mechanische und thermische Belastung kann der Rahmen leicht beschädigt werden.

Ein weiterer Nachteil ist die generell lange Aushärtezeit von Kunststoff-Reaktionsschäumen im Werkzeug, die der Forderung nach verkürzten Herstellzeiten entgegensteht.

Eine Anordnung zum Anbringen von Glaskeramik-Kochflächen, mit einem zu einer dünnen Kante verjüngten Randbereich, an eine Arbeitsplatte ist aus der DE 196 49 767 A1 bekannt, wobei der untere und seitliche Randbereich der Kochfläche aus einem Material mittlerer Härte, z. B. Silikongummi, besteht, der direkt an die Kochfläche anvulkanisiert oder angespritzt ist.

Eine mit einer Glaskeramikkochplatte fest verbundene Dichtung, die mit der Kochplatte an deren unteren und seitlichen Randbereich verbunden ist, ist aus der DE 31 10 087 C2 bekannt. Die Dichtung, z. B. aus hitzebeständigem Silikon, das an die Kochplatte angespritzt wird, ist mit Anschlußelementen, die im unteren Bereich der Kochplatte angeordnet sind, direkt verbunden.

Die DE 195 25 825 A1 beschreibt ein Verfahren zur Herstellung eines Herd-Kochfeldes und ein hiernach hergestelltes Herd-Kochfeld. Dabei wird eine Platte aus Glaskeramik und ein zumindest die Oberfläche bildendes Metallprofil mit einer Kunststoff-Fütterung mittels Spritzgießen direkt in einer Spritzgießform miteinander formschlüssig verbunden, wobei die Kunststoff-Fütterung den Plattenrand vollständig, C-förmig umschließt. Dadurch, daß der Kunststoff im Randbereich der Kochplatte über diese hinausragt, und somit schutzlos äußeren Einflüssen ausgesetzt ist, ist es hierbei notwendig, zusätzlich ein den Kunststoff schützendes Metallprofil zu verwenden.

Weiterhin ist aus der DE 196 12 621 A1 ein Kochfeld mit einer Kochfläche aus Glas-/Glaskeramik sowie mindestens einer Funktionszone bekannt, wobei die Funktionszone ebenfalls aus Glas-/Glaskeramik gebildet und mittels einer temperaturbeständigen, dichten und dauerelastischen Verbindung in die Kochfläche eingelassen ist. Kochfläche und Funktionszone sind dabei nur über ihre Stirnfläche miteinander verbunden.

Es ist Aufgabe der Erfindung ein Verfahren zur Herstellung einer Halterung für im wesentlichen flache Formkörper aus sprödbrüchigem Werkstoff zu finden, wobei die Halterung den Formkörper wenigstens im unteren und seitlichen Randbereich umfaßt.

Das Verfahren soll einfach gestaltet, mit wenigen Schritten ausführbar, einen hohen Automatisierungsgrad und eine gute Prozeßkontrollierbarkeit aufweisen, sowie einfach, schnell und flexibel an unterschiedliche Formkörpergeometrien anpaßbar sein.

Bei dem Verfahren sollen Halterung und ein oder mehrere Formkörper direkt miteinander verbunden werden.

Weiterhin ist es Aufgabe der Erfindung eine Halterung für entsprechende Formkörper zu finden. Die Halterung soll direkt an den Formkörper anformbar sein, gegebenenfalls einen Kantenschutz des Formkörpers und gegebenenfalls eine Montagehilfe zum einfachen Einbau des Formkörpers aufweisen, wobei die Halterung eine glatte, geschlossene, leicht zu reinigende Oberfläche aufweisen soll. Die Halterung soll beständig gegen besonders im Haushaltsbereich übliche Temperaturen, gegen Verschmutzungen und mechanische Belastungen sein. Die Halterung soll einfach, schnell und mit hoher, gleichbleibender Qualität herstellbar sein.

Des weiteren soll die Halterung einen Formkörper umfassen bzw. mehrere Formkörper umfassen und diese gleichzeitig fest miteinander verbinden.

Bezüglich des Verfahrens wird die Aufgabe gemäß Anspruch 1 durch folgende Schritte gelöst:
- Einlegen und Positionieren des Formkörpers in ein beheizbares Spritzgießwerkzeug mit wenigstens zwei Kavitätenplatten vorbestimmter Form, wobei die vorbestimmte Form der Kavitätenplatten die Form und Anordnung der Halterung bezüglich des Formkörpers bestimmt,
- Verschließen des Spritzgießwerkzeugs,
- Einspritzen von additionsvernetzbarem (heißvulkanisierbarem) Zweikomponenten-Flüssigsiliconkautschuk unter Druck,
- Heißvulkanisieren des Flüssigsiliconkautschuks, wobei die aus dem Siliconkautschuk gebildete Halterung mit dem Formkörper wenigstens im unteren und seitlichen Randbereich direkt verbunden wird, und
- Entformen des mit der Halterung direkt verbundenen Formkörpers.

Bezüglich der Halterung wird die Aufgabe gemäß Anspruch 15 dadurch gelöst, daß die Halterung aus temperaturbeständigem, additionsvernetztem (heißvulkanisiertem), spritzgegossenem Zweikomponenten-Siliconkautschuk gebildet ist, wobei die Halterung direkt an den Formkörper gespritzt und mit diesem verbunden ist.

Die erfindungsgemäße Halterung bildet einen wirksamen, dauerhaften Kantenschutz des Formkörpers im besonders sensiblen Bereich seines Seitenrandes.

Durch beispielsweise einen C-Schliff des Seitenrandes der Kochfläche wird eine besonders gute Verbindung zwischen der Halterung und dem Formkörper bewirkt. Zusätzlich zur guten Haftung des heißvulkanisierten Siliconkautschuks wird durch die Umformung des C-geschliffenen Seitenrands des Formkörper durch die Halterung verhindert, daß der Formkörper unter Belastung aus der Halterung herausgedrückt werden kann.

Die Halterung weist die geforderte glatte, porenfreie Oberfläche auf, so daß Reinigungsmittel und beispielsweise im Haushalt beim Kochen auftretende Verschmutzungen nicht eindringen und auch schlecht an der Oberfläche anhaften. Die Verschmutzungsanfälligkeit ist gegenüber bekannten Halterungen auf ein Minimum reduziert.

Die Halterung weist darüber hinaus die beispielsweise im Haushaltsbereich geforderte Temperaturstabilität auf.

Aufgrund der zur Oberfläche des Formkörpers flächenbündigen Anordnung der Halterung, deren hervorragenden Oberflächenbeschaffenheit und deren guten mechanischen Eigenschaften (glatt, porenfrei, flexibel) ist auch die Beständigkeit gegenüber herkömmlichen, mechanischen Belastungen, z. B. über die Halterung gezogenes Kochgeschirr, gewährleistet.

Das erfindungsgemäße Verfahren ermöglicht die kostengünstige Anformung eines Formkörpers mit einer hochwertigen Halterung, die gegebenenfalls einen wirksamen Kantenschutz und gegebenenfalls eine in einen Tragabschnitt der Halterung eingebettete Montagehilfe integriert.
Mit diesem Verfahren ist es möglich, mittels weniger Verfahrensschritte, eine montagegefertigte Halterung für einen Formkörper herzustellen.

Das erfindungsgemäße Verfahren ist mit herkömmlichen Spritzgießmaschinen unter Verwendung an und für sich bekannter Spritzgießwerkzeuge durchführbar.
Herkömmliche Spritzgießmaschinen weisen einen hohen Automatisierungsgrad und eine effektive Prozeßkontrolle auf, die auch dem erfindungsgemäßen Verfahren zugute kommen.

Die Implementierung des erfindungsgemäßen Verfahrens in bestehende Hochleistungs-Spritzgießmaschinen mit Umbausatz erlaubt erst die schnelle, kostengünstige Herstellung der erfindungsgemäßen Halterung.

Die problemlose Verwendung von an die Geometrie der Halterung angepaßten Kavitätenplatten zeigt ebenfalls die vorteilhafte Flexibilität des Verfahrens.
Um eine bestimmte, vorgegebene Kochfläche mit einer bestimmten, erfindungsgemäßen Halterung zu verbinden müssen nur die Kavitätenplatten ausgetauscht werden.

In den Unteransprüchen werden weitere bevorzugte Ausführungen der Erfindung genannt.

So ist es von Vorteil, daß die Halterung direkt an mehrere Formkörper spritzgegossen ist und diese miteinander verbindet. Die Halterung umfaßt in diesem Fall nicht nur einen einzigen Formkörper, sondern sie umfaßt mehrere Formkörper gleichzeitig.
Dadurch ist es beispielsweise möglich, mehrere Formkörper nebeneinander anzuordnen und über die erfindungsgemäße Halterung fest miteinander zu binden.

Es ist auch von Vorteil, daß die Montagehilfe rechtwinklig vom Formkörper abragt. Die Montage gestaltet sich dadurch besonders einfach, daß die Gegenelemente an denen die Montagehilfe, und damit der mit der Halterung versehene Formkörper, befestigt wird zumeist rechtwinklig zum Formkörper angeordnet sind. Bevorzugt ist die Montagehilfe so ausgestaltet, daß sie einfach in ein als Rastaufnahme ausgebildetes Gegenelement eingerastet werden kann.
Gegenelement zur Aufnahme der Montagehilfe kann beispielsweise ein direkt mit einem Ausschnitt einer Arbeitsplatte verbundener Montagerahmen sein, so daß durch einfaches Einrasten des mit der Halterung versehenen Formkörpers ein Einbau des Formkörpers erfolgt.

Des weiteren ist es von Vorteil, daß die Montagehilfe eine Verankerung aufweist. Dadurch wird eine form- und kraftschlüssige, dauerhafte Verbindung zwischen dem Tragabschnitt der Halterung und der Montagehilfe gewährleistet. Der Formschluß zwischen der Halterung und der Montagehilfe kann dabei auf unterschiedliche Weise hergestellt werden. Beispielsweise kann die Verankerung Rippen aufweisen, die in den Tragabschnitt eingebettet sind, oder aber mit Durchbrechungen versehen sein, die vom Siliconkautschuk der Halterung umgeben sind. Schließlich kann die Montagehilfe eine Biegung aufweisen, mit dem sie im Siliconkautschuk verankert ist.

Die Verankerungen erstrecken sich zur sicheren Fixierung der Montagehilfe bevorzugt quer zur auf die Montagehilfe wirkende Hauptbelastungsrichtung. Im Falle einer rechtwinklig zum Formkörper abragenden Montagehilfe beispielsweise parallel zum Formkörper.

Vorzugsweise ist die Montagehilfe aus Metall.

Bevorzugt ist der Formkörper aus Glas, insbesondere Kalk-Natron-Glas, Borosilicatglas oder Alumosilicatglas, wobei das Glas bevorzugt vorgespannt ist, aus Glaskeramik oder aus Keramik, insbesondere aus SiC, Si₃N₄ und/oder Al₂O₃ enthaltender Keramik. Formkörper aus den genannten Materialien lassen sich dauerhaft mit einer erfindungsgemäßen Halterung verbinden und deren Kanten effektiv schützen.

Besonders bevorzugt umfaßt die Halterung wenigstens eine Kochfläche und eine Funktionszone, wobei Kochfläche und Funktionszone aus unterschiedlichen sprödbrüchigen Materialien sein können. Es werden also Formteile von der erfindungsgemäßen Halterung umfaßt und durch diese verbunden, denen unterschiedlichen Funktionen zugeordnet sind. So kann eine Funktionszone beispielsweise ein Formteil sein, das Bedien- und/oder Anzeigenfunktionen aufweist. Eine Funktionszone kann auch einfach eine Abstelloder Warmhaltefläche sein.

Die erfindungsgemäße Halterung bildet bevorzugt die untere und seitliche einbaufertige Umrahmung der Kochfläche und/oder der Funktionszone. Sonst übliche Metall- und/oder Kunststoffrahmen sind überflüssig, da die Halterung aufgrund ihrer genannten Eigenschaften bisherige Umrahmungen ersetzt.

Vorzugsweise umfaßt die Halterung Kochflächen z. B. aus Glaskeramik, Kochzonen z. B. aus Keramik, Hobtops z. B. aus DURAX®, Kühlschrankeinlegeböden, Schaugläser, Displayglasscheiben und Trennstege z. B. für einen Cook-In®.

Der Flüssigsiliconkautschuk wird bevorzugt mit einer Spritzgießmaschine im Liquid-Injection-Moulding (LIM)-Verfahren in das verschlossene Spritzgießwerkzeug eingespritzt.

Die Verwendung von bestehenden Spritzgießmaschinen und bekannten Spritzgießverfahren führt auch zu den genannten Vorteilen. Die Erfindung ist . jedoch nicht auf die Verwendung bestehende Spritzgießmaschinen und - verfahren beschränkt.

Der Flüssigsiliconkautschuk wird bevorzugt mit einem Druck von 100 bis 200 bar bei einer Temperatur von 20° C bis 30° C eingespritzt. Anschließend wird Flüssigsiliconkautschuk bei einer Temperatur von 140° C bis 200° C vernetzt. Die Vernetzungszeit (Vulkanisationszeit) beträgt vorteilhaft 3 bis 7 Sekunden pro Millimeter Wandstärke der Halterung.

Ein weiterer Vorteil des erfindungsgemäßen Verfahrens ist es, daß mehrere Formkörper gleichzeitig mit einer Halterung versehen und über die Halterung miteinander verbunden werden können.

Die Erfindung wird im folgenden von in den Zeichnungen dargestellten Ausführungsbeispielen näher erläutert:

Es zeigen:
- Fig. 1: in Seitendarstellung und in Teilansicht ein Formteil in Form einer ebenen Kochfläche mit einer Halterung in Kavitätenplatten,
- Fig. 2: in Seitendarstellung und in Teilansicht eine Ausgestaltungsmöglichkeit einer Halterung,
- Fig. 3: eine Seitendarstellung einer Kochfläche in einem Spritzgießwerkzeug mit Kavitätenplatten,
- Fig. 4: eine weitere Ausgestaltungsmöglichkeit nach Fig. 3, und
- Fig. 5: eine Seitendarstellung zweier Formteile mit einer Halterung in einem Spritzgießwerkzeug mit Kavitätenplatten.

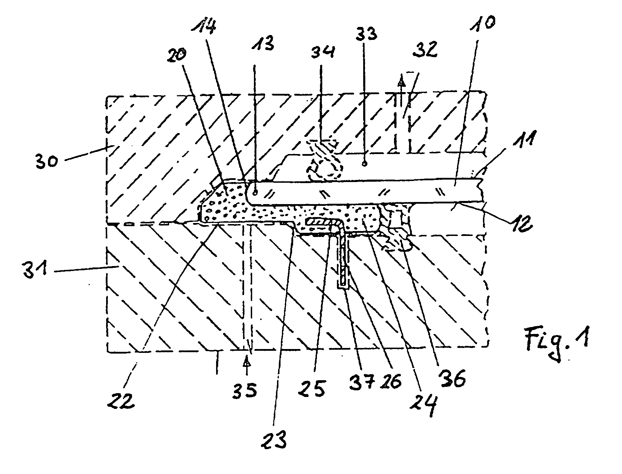

Die Figur 1 zeigt Kavitätenplatten bestehend aus einem Formoberteil 30 und einem Formunterteil 31. Die Kavitätenplatten sind gestrichelt dargestellt, so daß sich die die Erfindung betreffende Halterung 20 und die Kochfläche 10 deutlich erkennen lassen. Das Formoberteil 30 besitzt ein Auflager, mit dem es im Bereich des Randes 13 der Kochfläche 10 auf deren Oberseite 11 aufsitzt. Im übrigen Bereich der Kochfläche ist die Kavitätenplatte gegenüber der Oberseite 11 zurückversetzt, so daß sich eine Unterdruckkammer 33 ergibt.
Zum Auflager hin ist die Unterdruckkammer 33 mittels eines Dichtelementes 34 abgedichtet. An einen Kanal 32 des Formoberteils 30 kann eine Unterdruckpumpe angeschlossen werden. Der Kanal 32 steht mit der Unterdruckkammer 33 in räumlicher Verbindung. Wenn über die Unterdruckpumpe der Druck in der Unterdruckkammer 33 reduziert wird, zieht sich die Kochfläche 10 gegen das Auflager. Damit ist sie im Werkzeug fixiert.

Das Formunterteil 31 ist unter der Unterseite 12 der Kochfläche 10 angeordnet. Gegen die Unterseite 12 stützt sich das Formunterteil 31 mit einem elastischen Formstück 36 ab. In Richtung zu dem Rand 13 der Kochfläche 10 beabstandet zu dem Formstück 36 besitzt das Formunterteil 31 eine Aufnahme 37. In diese Aufnahme 37 kann eine Montagehilfe 26 eingesteckt werden. Über einen Einspritzkanal 35 kann der Flüssigsiliconkautschuk eingespritzt werden. Der Flüssigsiliconkautschuk besteht aus zwei Komponenten, die vor dem Eintritt in den Einspritzkanal 35 gemischt werden.
So kann beispielsweise der Flüssigsiliconkautschuk mit einer Spritzgießmaschine im Liquid-Injection-Moulding (LIM)-Verfahren eingespritzt werden. Hierbei wird der Flüssigsiliconkautschuk mit einem Druck von 100 bis 200 bar bei einer Temperatur von 20°C bis 30°C eingespritzt. Nach dem Einspritzen des Flüssigsiliconkautschuks wird dieser bei einer Temperatur von 140°C bis 200°C vernetzt, wobei die Vernetzungszeit (Vulkaniationszeit) vorzugsweise 3 bis 7 Sekunden pro Millimeter Wandstärke der Halterung 20 beträgt. Während der Vulkanisation kann der Druck im Innern des Werkzeugs bis auf 400 bar steigen.

Der vulkanisierte Silikonkautschuk bildet zusammen mit der Montagehilfe 26 die Halterung 20, die den Rand 13 der Kochfläche 10 umfaßt.

Die Halterung 20 hat einen Tragabschnitt 24, der die Kochfläche an ihrer Unterseite 12 unterfängt. In diesen Tragabschnitt 24 ist die Montagehilfe 26 mit einer Verankerung eingebettet. Der Tragabschnitt 24 geht über einen Absatz 23 in eine Auflagefläche 22 über. Mit der Auflagefläche 22 kann die Halterung 20 in einem Durchbruch einer Arbeitsplatte festgemacht werden.

Wie die Darstellung nach Figur 1 weiter zeigt, ist der Rand 13 der Kochfläche 10 gerundet, er weist einen C-Schliff auf. Hierdurch bildet sich eine Formschräge 14. Die Formschräge 14 wird mit dem Siliconkautschuk hinterfüllt, so daß sich eine Hinterschneidung bildet. Diese Hinterschneidung stellt einen Formschluß zwischen der Kochfläche 10 und der Halterung 20 her. Er verhindert zusätzlich zu der guten Anhaftung des Siliconkautschuks an der Kochfläche, daß die Kochfläche 10 durch eine starke Belastung aus der Halterung herausgedrückt werden kann.

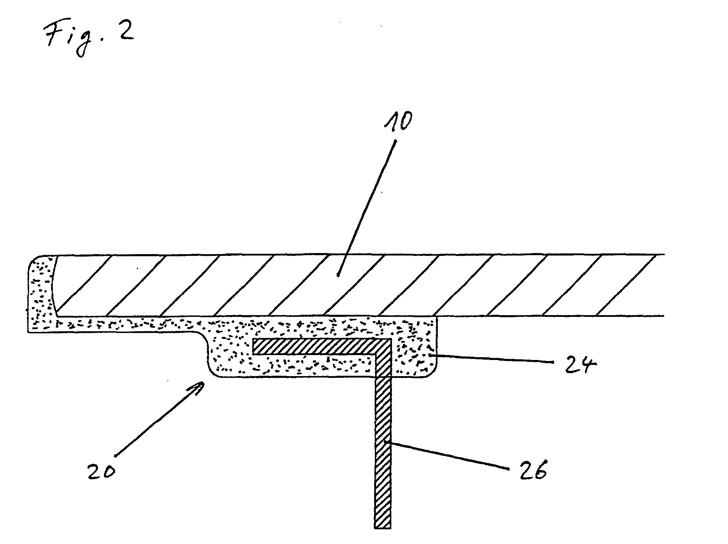

In Figur 2 ist eine weitere Ausgestaltungsvariante einer Halterung 20 dargestellt. Die Halterung besitzt ebenso wie die Halterung 20 gemäß Figur 1 eine oder mehrere Montagehilfen 26. An diesen lassen sich Installationseinheiten befestigen, die aus Gründen der Übersichtlichkeit in der Zeichnung nicht dargestellt sind. Die Installationseinheiten dienen beispielsweise zur Aufnahme von Heizkörpern.

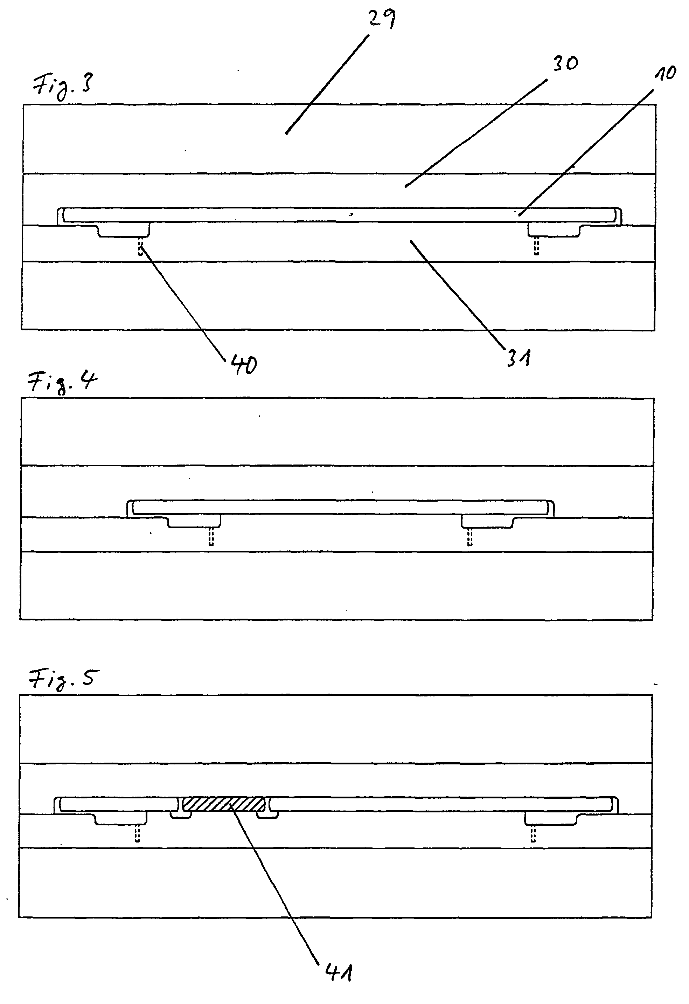

In den Figuren 3 und 4 sind schematisch zwei Spritzgießwerkzeuge 29 dargestellt. Eine jeweils in die Kavitätenplatten 30, 31 eingelegte Kochfläche 10 ist ebenfalls gezeigt. Die Kavitätenplatten 30, 31 unterscheiden sich durch ihre unterschiedliche, an die Kochfläche 10 angepaßte, Geometrie. Um eine bestimmte, vorgegebene Kochfläche 10 mit einer bestimmten, erfindungsgemäßen Halterung 20 zu verbinden, müssen nur die Kavitätenplatten 30, 31 des Spritzgießwerkzeuges ausgetauscht werden.

Figur 5 zeigt ein Spritzgießwerkzeug 29. Eine jeweils in die Kavitätenplatten 30, 31 eingelegte Kochfläche 10 und eine Funktionszone 41 ist ebenfalls gezeigt. Die untere Kavitätenplatte 31 weist dabei eine sowohl an die Kochfläche 10 als auch an die Funktionszone 41 angepaßte Geometrie auf. Der in die Hohlräume der Kavitätenplatten eingespritzte, vulkanisierte Siliconkautschuk bildet zusammen mit der Montagehilfe die Halterung, die den Rand der Kochfläche 10 und der Funktionszone 41 umfaßt. Gleichzeitig werden Kochfläche 10 und Funktionszone 41 fest miteinander verbunden. Die verschiedenen Formteile können dabei beliebig zueinander angeordnet sein, wobei die Geometrie der Kavitätenplatten und die Geometrie und Anordnung der Formteile untereinander die Geometrie der Halterung bestimmt.

Bevorzugt wird wenigstens ein Funktionselement in eine Ausnehmung einer Kochfläche eingelassen und mit dieser über die erfindungsgemäße Halterung fest verbunden.

In einer weiteren Ausgestaltung der Erfindung werden die Formteile nur teilweise von der Halterung umfaßt. So kann beispielsweise eine Funktionszone in die Ausnehmung einer Kochfläche mittels einer Halterung integriert werden, ohne daß die Kochfläche von einer Halterung gleichzeitig umrahmt wird.

Des weiteren ist es möglich, von der ebenen Form abweichende Formkörper durch Anpassung der Kavitätenplatten mit einer erfindungsgemäßen Halterung zu versehen. Von der ebenen Form abweichende Kochflächen sind beispielsweise in der deutschen Offenlegungsschrift DE 43 33 334 A1 beschrieben.

Bevorzugt wird als Zweikomponenten-Flüssigsiliconkautschuk SILOPREN® von GE Bayer Silicones auf einer Spritzgießmaschine der Firma KLÖCKNER DESMA Elastomertechnik verwendet, um eine CERAN® oder DURAX® Kochfläche mit einer erfindungsgemäßen Halterung zu verbinden.

## Patentansprüche

1. Verfahren zur Herstellung einer Halterung für im wesentlichen flache Formkörper aus sprödbrüchigem Werkstoff, wobei die Halterung den Formkörper wenigstens im unteren und seitlichen Randbereich umfaßt,
**gekennzeichnet durch** die Schritte:
- Einlegen und Positionieren des Formkörpers in ein beheizbares Spritzgießwerkzeug mit wenigstens zwei Kavitätenplatten vorbestimmter Form, wobei die vorbestimmte Form der Kavitätenplatten die Form und Anordnung der Halterung bezüglich des Formkörpers bestimmt,
- Verschließen des Spritzgießwerkzeugs,
- Einspritzen von additionsvernetzbarem (heißvulkanisierbarem) Zweikomponenten-Flüssigsiliconkautschuk unter Druck,
- Heißvulkanisieren des Flüssigsiliconkautschuks, wobei die aus dem Siliconkautschuk gebildete Halterung mit dem Formkörper wenigstens im unteren und seitlichen Randbereich direkt verbunden wird, und
- Entformen des mit der Halterung direkt verbundenen Formkörpers.

2. Verfahren nach Anspruch 1,
**dadurch gekennzeichnet,**
**daß** mehrere Formkörper in das Spritzgießwerkzeug eingelegt und positioniert werden, wobei die vorbestimmte Form der Kavitätenplatten die Form und Anordnung der Halterung bezüglich der Formkörper sowie die Anordnung der Formkörper zueinander bestimmt.

3. Verfahren nach Anspruch 1 oder 2,
**dadurch gekennzeichnet,**
**daß** der Flüssigsiliconkautschuk mit einer Spritzgießmaschine im Liquid-Injection-Moulding (LIM)-Verfahren in das verschlossene Spritzgießwerkzeug eingespritzt wird.

4. Verfahren nach wenigstens einem der Ansprüche 1 bis 3,
**dadurch gekennzeichnet,**
**daß** der Flüssigsiliconkautschuk mit einem Druck von 100 bis 200 bar bei einer Temperatur von 20 bis 30 °C eingespritzt wird.

5. Verfahren nach wenigstens einem der Ansprüche 1 bis 4,
**dadurch gekennzeichnet,**
**daß** der Flüssigsiliconkautschuk bei einer Temperatur von 140 bis 200 °C vernetzt wird, wobei die Vernetzungszeit (Vulkanisationszeit) 3 bis 7 Sekunden pro Millimeter Wandstärke der Halterung beträgt.

6. Verfahren nach wenigstens einem der Ansprüche 1 bis 5,
**dadurch gekennzeichnet,**
**daß** die Kavitätenplatten so ausgebildet werden, daß die resultierende Halterung einen Tragabschnitt, der den Formkörper an dessen Unterseite unterfängt, aufweist, wobei gegebenenfalls Montagehilfen so in die Kavitätenplatten eingelegt und positioniert werden, daß sie in den resultierenden Tragabschnitt zumindest teilweise eingebettet und mit diesem fest verbunden sind.

7. Verfahren nach Anspruch 6,
**dadurch gekennzeichnet,**
**daß** die Montagehilfe rechtwinklig zum Formkörper angebracht wird.

8. Verfahren nach Anspruch 6 oder 7,
**dadurch gekennzeichnet,**
**daß** die Montagehilfe eine Verankerung aufweist, insbesondere eine Verankerung, die sich quer zur der auf die Montagehilfe wirkende Hauptbelastungsrichtung erstreckt.

9. Verfahren nach wenigstens einem der Ansprüche 1 bis 8,
**dadurch gekennzeichnet,**
**daß** die Kavitätenplatten so ausgebildet werden, daß die resultierende Halterung einen Kantenschutz des Formkörpers bildet.

10. Verfahren nach wenigstens einem der Ansprüche 1 bis 9,
**dadurch gekennzeichnet,**
**daß** Formkörper aus Glas, insbesondere aus Kalk-Natron-Glas, Borosilicatglas oder Alumosilicatglas verwendet werden.

11. Verfahren nach wenigstens einem der Ansprüche 1 bis 10,
**dadurch gekennzeichnet,**
**daß** Formkörper aus Glaskeramik verwendet werden.

12. Verfahren nach wenigstens einem der Ansprüche 1 bis 11,
**dadurch gekennzeichnet,**
**daß** Formkörper aus Keramik, insbesondere aus SiC, Si₃N₄ oder Al₂O₃ enthaltender Keramik verwendet werden.

13. Verfahren nach wenigstens einem der Ansprüche 1 bis 12,
**dadurch gekennzeichnet,**
**daß** Kochflächen, Kochzonen, Hobtops, Kühlschrankeinlegeböden, Schaugläser und Displayglasscheiben mit der Halterung direkt verbunden werden.

14. Verfahren nach wenigstens einem der Ansprüche 1 bis 12,
**dadurch gekennzeichnet,**
**daß** wenigstens eine Kochfläche und wenigstens eine Funktionszone mit der Halterung direkt verbunden werden, wobei die Funktionszone gegebenenfalls Bedien- und/oder Anzeigenelemente enthält.

15. Halterung für im wesentlichen flache Formkörper aus sprödbrüchigem Werkstoff, wobei die Halterung den Formkörper wenigstens im unteren und seitlichen Randbereich umfaßt,
**dadurch gekennzeichnet,**
**daß** die Halterung aus temperaturbeständigem, additionsvernetztem (heißvulkanisiertem), spritzgegossenem Zweikomponenten-Siliconkautschuk gebildet ist, wobei die Halterung direkt an den Formkörper gespritzt und mit diesem verbunden ist.

16. Halterung nach Anspruch 15
**dadurch gekennzeichnet,**
**daß** die Halterung direkt an mehrere Formkörper gespritzt ist, wobei die Formkörper über die Halterung miteinander verbunden sind.

17. Halterung nach Anspruch 15 oder 16,
**dadurch gekennzeichnet,**
**daß** die Halterung einen Kantenschutz des Formkörpers bildet.

18. Halterung nach wenigstens einem der Ansprüche 15 bis 17,
**dadurch gekennzeichnet,**
**daß** die Halterung einen Tragabschnitt mit gegebenenfalls Montagehilfen aufweist, wobei der Tragabschnitt den Formkörper an dessen Unterseite unterfängt.

19. Halterung nach Anspruch 18,
**dadurch gekennzeichnet,**
**daß** die Montagehilfe rechtwinklig von dem Formkörper abragt.

20. Halterung nach Anspruch 18 oder 19,
**dadurch gekennzeichnet,**
**daß** die Montagehilfe eine Verankerung aufweist, insbesondere eine Verankerung, die sich quer zur der auf die Montagehilfe wirkende Hauptbelastungsrichtung erstreckt.

21. Halterung nach wenigstens einem der Ansprüche 15 bis 20,
**dadurch gekennzeichnet,**
**daß** die Halterung wenigstens einen Formkörper aus Glas, insbesondere aus Kalk-Natron-Glas, Borosilicatglas oder Alumosilicatglas umfaßt.

22. Halterung nach wenigstens einem der Ansprüche 15 bis 21,
**dadurch gekennzeichnet,**
**daß** die Halterung wenigstens einen Formkörper aus Glaskeramik umfaßt.

23. Halterung nach wenigstens einem der Ansprüche 15 bis 22,
**dadurch gekennzeichnet,**
**daß** die Halterung wenigstens einen Formkörper aus Keramik, insbesondere aus SiC, Si₃N₄ oder Al₂O₃ enthaltender Keramik umfaßt.

24. Halterung nach wenigstens einem der Ansprüche 15 bis 23,
**dadurch gekennzeichnet,**
**daß** die Halterung den Einbaurahmen eines Formkörper bildet.

25. Halterung nach wenigstens einem der Ansprüche 15 bis 24,
**dadurch gekennzeichnet,**
**daß** die Halterung Kochflächen, Kochzonen, Hobtops, Kühlschrankeinlegeböden, Schaugläser und Displayglasscheiben umfaßt.

26. Halterung nach wenigstens einem der Ansprüche 15 bis 25,
**dadurch gekennzeichnet,**
**daß** die Halterung wenigstens eine Kochfläche und wenigstens eine Funktionszone miteinander verbindet, wobei der Funktionszone gegebenenfalls Bedien- und/oder Anzeigenelemente zugeordnet sind.

## Claims

1. Process for producing a mount for substantially planar shaped objects made from brittle material, the mount surrounding the shaped object at least in the area of the bottom and side edges, **characterized by** the following steps:
- insertion and positioning of the shaped object in a heatable injection mould with at least two cavity plates of predetermined shape, the predetermined shape of the cavity plates determining the shape and arrangement of the mount with respect to the shaped object,
- closure of the injection mould,
- injection of addition-crosslinkable (hot-vulcanizable) two-component liquid silicone rubber under pressure,
- hot vulcanization of the liquid silicone rubber, during which the mount which is formed from the silicone rubber is directly joined to the shaped object at least in the area of the bottom and side edges, and
- demoulding of the shaped object which has been directly joined to the mount.

2. Process according to Claim 1, **characterized in that** a plurality of shaped objects are inserted and positioned in the injection mould, the predetermined shape of the cavity plates determining the shape and arrangement of the mount with respect to the shaped objects and the arrangement of the shaped objects with respect to one another.

3. Process according to Claim 1 or 2, **characterized in that** the liquid silicone rubber is injected into the closed injection mould using an injection-moulding machine employing the liquid-injection-moulding (LIM) process.

4. Process according to at least one of Claims 1 to 3, **characterized in that** the liquid silicone rubber is injected at a pressure of 100 to 200 bar and a temperature of 20 to 30°C.

5. Process according to at least one of Claims 1 to 4, **characterized in that** the liquid silicone rubber is crosslinked at a temperature of 140 to 200°C, the crosslinking time (vulcanization time) amounting to 3 to 7 seconds per millimetre of wall thickness of the mount.

6. Process according to at least one of Claims 1 to 5, **characterized in that** the cavity plates are designed in such a way that the resultant mount has a supporting section, which engages beneath the underside of the shaped object, in which case, if appropriate, fitting aids are inserted and positioned in the cavity plates in such a way that they are at least partially embedded in the resultant supporting section and are securely joined to the latter.

7. Process according to Claim 6, **characterized in that** the fitting aid is arranged at right angles to the shaped object.

8. Process according to Claim 6 or 7, **characterized in that** the fitting aid has an anchoring means, in particular an anchoring means which extends transversely with respect to the main direction of loading which acts on the fitting aid.

9. Process according to at least one of Claims 1 to 8, **characterized in that** the cavity plates are designed in such a way that the resultant mount protects the edges of the shaped object.

10. Process according to at least one of Claims 1 to 9, **characterized in that** shaped objects made from glass, in particular from soda-lime glass, borosilicate glass or aluminosilicate glass are used.

11. Process according to at least one of Claims 1 to 10, **characterized in that** shaped objects made from glass ceramic are used.

12. Process according to at least one of Claims 1 to 11, **characterized in that** shaped objects made from ceramic, in particular from ceramic containing SiC, Si₃N₄ or Al₂O₃ are used.

13. Process according to at least one of Claims 1 to 12, **characterized in that** hotplates, cooking areas, hob tops, refrigerator shelves, viewing windows and display glass panes are directly joined to the mount.

14. Process according to at least one of Claims 1 to 12, **characterized in that** at least one hotplate and at least one functional zone are directly joined to the mount, the functional zone, if appropriate, containing operating and/or display elements.

15. Mount for substantially planar shaped objects made from brittle material, the mount surrounding the shaped object at least in the area of the bottom and side edges, **characterized in that** the mount is formed from temperature-resistant, addition-crosslinked (hot-vulcanized), injection-moulded two-component silicone rubber, the mount being injected directly onto the shaped object and being joined to the latter.

16. Mount according to Claim 15, **characterized in that** the mount is injected directly onto a plurality of shaped objects, the shaped objects being joined together by means of the mount.

17. Mount according to Claim 15 or 16, **characterized in that** the mount protects the edges of the shaped object.

18. Mount according to at least one of Claims 15 to 17, **characterized in that** the mount has a supporting section with, if appropriate, fitting aids, the supporting section engaging beneath the underside of the shaped object.

19. Mount according to Claim 18, **characterized in that** the fitting aid projects at right angles from the shaped object.

20. Mount according to Claim 18 or 19, **characterized in that** the fitting aid has an anchoring means, in particular an anchoring means which extends transversely with respect to the main direction of loading which acts on the fitting aid.

21. Mount according to at least one of Claims 15 to 20, **characterized in that** the mount surrounds at least one shaped object made from glass, in particular from soda-lime glass, borosilicate glass or aluminosilicate glass.

22. Mount according to at least one of Claims 15 to 21, **characterized in that** the mount surrounds at least one shaped object made from glass ceramic.

23. Mount according to at least one of Claims 15 to 22, **characterized in that** the mount surrounds at least one shaped object made from ceramic, in particular from ceramic containing SiC, Si₃N₄ or Al₂O₃.

24. Mount according to at least one of Claims 15 to 23, **characterized in that** the mount forms the installation frame of a shaped object.

25. Mount according to at least one of Claims 15 to 24, **characterized in that** the mount surrounds hotplates, cooking areas, hob tops, refrigerator shelves, viewing windows and display glass panes.

26. Mount according to at least one of Claims 15 to 25, **characterized in that** the mount joins together at least one hotplate and at least one functional zone, the functional zone, if appropriate, being assigned operating and/or display elements.

## Revendications

1. Procédé pour la fabrication d'une structure d'appui pour un produit substantiellement plat en matière fragile, dans lequel la structure d'appui entoure le produit au moins dans la région du bord inférieur et latéral, **caractérisé par** les étapes suivantes:
• dépôt et positionnement du produit dans un outil chauffant de moulage par injection avec au moins deux plaques creuses de forme prédéterminée, la forme prédéterminée des plaques creuses déterminant la forme et la disposition de la structure d'appui par rapport au produit,
• fermeture de l'outil de moulage par injection,
• injection sous pression de caoutchouc silicone liquide à deux composants réticulable par addition (vulcanisable à chaud),
• vulcanisation à chaud du caoutchouc silicone liquide, la structure d'appui formée avec le caoutchouc silicone étant assemblée directement au produit au moins dans la région du bord inférieur et latéral, et
• démoulage du produit assemblé directement à la structure d'appui.

2. Procédé selon la revendication 1, **caractérisé en ce que** plusieurs produits sont déposés et positionnés dans l'outil de moulage par injection, la forme prédéterminée des plaques creuses déterminant la forme et la disposition de la structure d'appui par rapport aux produits ainsi que la disposition des produits l'un par rapport à l'autre.

3. Procédé selon la revendication 1 ou 2, **caractérisé en ce que** le caoutchouc silicone liquide est injecté dans l'outil de moulage par injection fermé avec une machine de moulage par injection par le procédé de moulage par injection à l'état liquide (LIM).

4. Procédé selon au moins une des revendications 1 à 3, **caractérisé en ce que** le caoutchouc silicone liquide est injecté avec une pression de 100 à 200 bar à une température de 20 à 30°C.

5. Procédé selon au moins une des revendications 1 à 4, **caractérisé en ce que** le caoutchouc silicone liquide est réticulé à une température de 140 à 200°C, le temps de réticulation (temps de vulcanisation) étant de 3 à 7 secondes par millimètre d'épaisseur de paroi de la structure d'appui.

6. Procédé selon au moins une des revendications 1 à 5, **caractérisé en ce que** les plaques creuses sont configurées de telle façon que la structure d'appui résultante présente une partie portante, qui soutient le produit sur son côté inférieur, des accessoires de montage étant éventuellement placés et positionnés dans les plaques creuses de telle façon qu'ils soient noyés au moins partiellement dans la partie portante résultante et qu'ils soient solidement assemblés à celle-ci.

7. Procédé selon la revendication 6, **caractérisé en ce que** l'accessoire de montage est placé perpendiculairement au produit.

8. Procédé selon la revendication 6 ou 7, **caractérisé en ce que** l'accessoire de montage comporte un ancrage, en particulier un ancrage qui s'étend transversalement à la direction de la charge principale agissant sur l'accessoire de montage.

9. Procédé selon au moins une des revendications 1 à 8, **caractérisé en ce que** les plaques creuses sont configurées de telle façon que la structure d'appui résultante forme une protection des arêtes du produit.

10. Procédé selon au moins une des revendications 1 à 9, **caractérisé en ce que** l'on utilise des produits en verre, en particulier en verre sodé calcique, en verre de borosilicate ou en verre d'alumosilicate.

11. Procédé selon au moins une des revendications 1 à 10, **caractérisé en ce que** l'on utilise des produits en vitrocéramique.

12. Procédé selon au moins une des revendications 1 à 11, **caractérisé en ce que** l'on utilise des produits en céramique, en particulier en céramique contenant SiC, Si₃N₄ ou Al₂O₃.

13. Procédé selon au moins une des revendications 1 à 12, **caractérisé en ce que** des plaques de cuisson, des zones de cuisson, des tables de cuisson, des clayettes de réfrigérateur, des verres de regard et des vitres d'affichage sont assemblés directement à la structure d'appui.

14. Procédé selon au moins une des revendications 1 à 12, **caractérisé en ce qu'**au moins une plaque de cuisson et au moins une zone fonctionnelle sont assemblées directement à la structure d'appui, la zone fonctionnelle comportant éventuellement des éléments de commande et/ou d'affichage.

15. Structure d'appui pour un produit substantiellement plat en matière fragile, dans laquelle la structure d'appui entoure le produit au moins dans la région du bord inférieur et latéral, **caractérisée en ce que** la structure d'appui est formée de caoutchouc silicone à deux composants moulé par injection, résistant à la température et réticulé par addition (vulcanisé à chaud), la structure d'appui étant injectée directement sur le produit et assemblée à celui-ci.

16. Structure d'appui selon la revendication 15, **caractérisée en ce que** la structure d'appui est injectée directement sur plusieurs produits, les produits étant assemblés les uns aux autres par la structure d'appui.

17. Structure d'appui selon la revendication 15 ou 16, **caractérisée en ce que** la structure d'appui forme une protection des arêtes du produit.

18. Structure d'appui selon au moins une des revendications 15 à 17, **caractérisée en ce que** la structure d'appui présente une partie portante avec le cas échéant des accessoires de montage, la partie portante soutenant le produit à son côté inférieur.

19. Structure d'appui selon la revendication 18, **caractérisée en ce que** l'accessoire de montage est saillant perpendiculairement sur le produit.

20. Structure d'appui selon la revendication 18 ou 19, **caractérisée en ce que** l'accessoire de montage comporte un ancrage, en particulier un ancrage qui s'étend transversalement à la direction de la charge principale agissant sur l'accessoire de montage.

21. Structure d'appui selon au moins une des revendications 15 à 20, **caractérisée en ce que** la structure d'appui comprend au moins un produit en verre, en particulier en verre sodé calcique, en verre de.borosilicate ou en verre d'alumosilicate.

22. Structure d'appui selon au moins une des revendications 15 à 21, **caractérisée en ce que** la structure d'appui comprend au moins un produit en vitrocéramique.

23. Structure d'appui selon au moins une des revendications 15 à 22, **caractérisée en ce que** la structure. d'appui comprend au moins un produit en céramique, en particulier en céramique contenant SiC, Si₃N₄ ou Al₂O₃.

24. Structure d'appui selon au moins une des revendications 15 à 23, **caractérisée en ce que** la structure d'appui forme le cadre de montage d'un produit.

25. Structure d'appui selon au moins une des revendications 15 à 24, **caractérisée en ce que** la structure d'appui comprend des plaques de cuisson, des zones de cuisson, des tables de cuisson, des clayettes de réfrigérateur, des verres de regard et des vitres d'affichage.

26. Structure d'appui selon au moins une des revendications 15 à 25, **caractérisée en ce que** la structure d'appui assemble l'une à l'autre au moins une plaque de cuisson et au moins une zone fonctionnelle, des éléments de commande et/ou d'affichage étant éventuellement associés à la zone fonctionnelle.
